# EUROPEAN PATENT APPLICATION

(11) **EP 3 944 660 A1**
(43) Date of publication of application: **26.01.2022**
(21) Application number: 19920395.1
(22) Date of filing: 31.05.2019
(51) Int. Cl.: H04W 28/02

(54) **INFORMATION PROCESSING METHOD AND DEVICE, STORAGE MEDIUM AND ELECTRONIC DEVICE**

(30) Priority: 20.03.2019 CN 201910214086
(71) Applicant: Caltta Technologies Co., Ltd., Beijing, 100176 (CN)
(72) Inventor: HUANG, Xiaojun, Beijing (Yizhuang group, high-end industrial area Beijing Pilot Free Trade Zone), 100176 (CN); CHEN, Mingjun, Beijing (Yizhuang group, high-end industrial area Beijing Pilot Free Trade Zone), 100176 (CN); ZHUO, Feng, Beijing (Yizhuang group, high-end industrial area Beijing Pilot Free Trade Zone), 100176 (CN); ZHANG, Xiaoqin, Beijing (Yizhuang group, high-end industrial area Beijing Pilot Free Trade Zone), 100176 (CN)
(74) Representative: Rossi, Ugo
(86) International application number: PCT/CN2019/089542
(87) International publication number: WO 2020/186628

(57) **Abstract**

An information processing method and device, a storage medium and an electronic device are provided. The method includes: defining (S202) information of a main control channel in a specified field of a common channel between two slots; and transmitting (S204) the common channel on carriers of a control channel and a service channel simultaneously. By means of the method, the problem in the related art that scanning of a main control channel needs to be manually configured is solved.

## Description

### Technical Field

The present disclosure relates to the field of communications, and in particular, to an information processing method and device, a storage medium and an electronic device.

### Background

In Digital Mobile Radio (DMR)/Public Digital Trunking (PDT) of related art, a control channel specified by a system needs to be obtained by a terminal in scenarios such as power-on, offline, and service termination of the terminal. The methods of obtaining the control channel generally include: (1) a control channel is configured to a terminal in advance, and the terminal directly obtains the control channel when the terminal is powered on; (2) a control channel list is pre-configured to a terminal, and the terminal performs scanning according to the control channel list when the terminal starts up and runs; (3) the terminal actively obtains information of the control channel from a current channel, for example, the terminal may obtain the information of the control channel from a system via signaling such as a voice service termination signaling and a neighboring station signaling in an inter-cell handover process.

However, the methods of obtaining the information of the control channel in the related art have the following problems.
1) In the method of writing a fixed control channel or writing control channel list information, a user of the terminal needs to pre-configure the related information, which makes the configuration during the cluster application complicated. Once the control channel or control channel list information has been configured, it would be cumbersome to modify the configuration, which results in low flexibility of the entire system.
2) In the method that the terminal obtains the information of the control channel by communicating with a current channel, only the service terminal of the current channel can obtain the information of the control channel, and a terminal temporarily residing in the current channel cannot actively initiate a request for obtaining the information of the control channel.
3) In the method that the terminal performs scanning, if a carrier is scanned but the carrier is not a target control channel, this channel resource is discarded and the scanning continues, and no available information is further obtained on this channel, which results in a slow scanning speed.

Aiming at the described problems in the related art, there is no effective solution at present.

### Summary

Embodiments of the present disclosure provide an information processing method and device, a storage medium and an electronic device, which can at least solve the problem in the related art that scanning of a main control channel needs to be manually configured.

According to some embodiments of the present disclosure, an information processing method is provided, including: defining information of a main control channel in a specified field of a common channel between two slots; and transmitting the common channel on carriers of a control channel and a service channel simultaneously.

In at least one exemplary embodiment, the two slots are obtained by dividing one Time Division Multiple Access (TDMA) frame.

In at least one exemplary embodiment, defining the information of the main control channel in the specified field of the common channel between the two slots includes: dividing a signaling field of the CACH common channel into multiple fields; and selecting part of fields from the multiple fields divided from the signaling field and defining the information of the main control channel in the selected part of fields.

In at least one exemplary embodiment, other fields except the part of fields for defining the information of the main control channel are defined as a reserved field and a field for carrying check information.

In at least one exemplary embodiment, the part of fields for defining the information of the main control channel includes a 3-bit main control channel and a 1-bit main control channel slot, and a 6bit reserved field and a 7bit check field.

According to some other embodiments of the present disclosure, an information processing device is provided, including: a definition module, configured to define information of a main control channel in a specified field of a common channel between two slots; and a transmission module, configured to transmit the common channel on carriers of a control channel and a service channel simultaneously.

In at least one exemplary embodiment, the two slots are obtained by dividing one Time Division Multiple Access (TDMA) frame.

In at least one exemplary embodiment, the definition module includes: a division unit, configured to divide a signaling field of the common channel into multiple fields; and a definition unit, configured to select part of fields from the multiple fields divided from the signaling field and define the information of the main control channel in the selected part of fields.

In at least one exemplary embodiment, the definition unit is further configured to define other fields except the part of fields for defining the information of the main control channel as a reserved field and a field for carrying check information.

According to yet other embodiments of the present disclosure, a storage medium is also provided, wherein the storage medium stores a computer program, wherein the computer program is configured to execute the operations in any one of the described method embodiments at runtime.

According to yet other embodiments of the present disclosure, an electronic device is provided, wherein the electronic device includes a memory and a processor, the memory stores a computer program, and the processor is configured to run the computer program to execute the operations in any one of the described method embodiments.

By means of the embodiments of the present disclosure, information of a main control channel can be defined in a specified field of a common channel between two slots, and then the common channel is transmitted on carriers of a control channel and a service channel simultaneously, thereby solving the problem in the related art that scanning of a main control channel needs to be manually configured.

### Brief Description of the Drawings

The accompanying drawings described herein are used to provide a deeper understanding of the present disclosure, and constitute a part of the present disclosure. The exemplary embodiments of the present disclosure and the description thereof are used to explain the present disclosure. The drawings and the exemplary embodiment do not constitute limitations to the present disclosure. In the drawings:
Fig. 1 is a block diagram of hardware structure of a mobile terminal for implementing an information processing method according to an embodiment of the present disclosure;
Fig. 2 is a flowchart of an information processing method according to an embodiment of the present disclosure;
Fig. 3 is a schematic diagram of the structure of a TDMA frame according to an embodiment of the present disclosure; and
Fig. 4 is a schematic diagram of the structure of an information processing device according to an embodiment of the present disclosure.

### Detailed Description of the Embodiments

The present disclosure is described below in detail with reference to the drawings and in conjunction with the embodiments. It is to be noted that embodiments in the present disclosure and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

### Embodiment 1

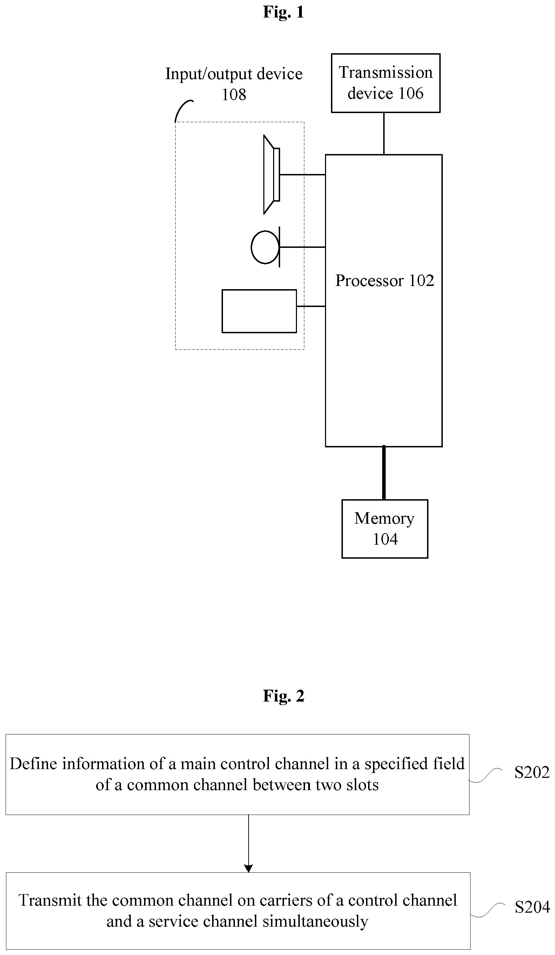

The method embodiment provided in the first embodiment of the present disclosure may be implemented in a mobile terminal, a computer terminal, or a similar computing device. Taking the implementation on a mobile terminal as an example, Fig. 1 is a block diagram of hardware structure of a mobile terminal for implementing an information processing method according to an embodiment of the present disclosure. As shown in Fig. 1, the mobile terminal 10 may include one or more (only one is shown in Fig. 1) processors 102 (the one or more processors 102 may include, but are not limited to, processing devices such as a microprocessor (e.g., MCU) or a programmable logic device (e.g., FPGA)) and a memory 104 configured to store data. In at least one exemplary embodiment, the mobile terminal may further include a transmission device 106 for providing a communication function and an input/output device 108. A person having ordinary skill in the art can understand that the structure shown in Fig. 1 is merely exemplary, and does not limit the structure of the foregoing mobile terminal. For example, the mobile terminal 10 may also include more or fewer components than shown in Fig. 1, or have a different configuration than that shown in Fig. 1.

The memory 104 may be configured to store a computer program, for example, a software program and a module of application software, such as a computer program corresponding to the information processing method in the embodiments of the present disclosure. The processor 102 runs the computer program stored in the memory 104, so as to execute various function applications and data processing, that is, to implement the foregoing information processing method. The memory 104 may include high-speed random access memory, and may also include non-volatile memory, such as one or more magnetic storage devices, flash memory, or other non-volatile solid-state memory. In some instances, the memory 104 may further include memory remotely located from the processor 102, which may be connected to the mobile terminal 10 over a network. Examples of such networks include, but are not limited to, the Internet, intranets, local area networks, mobile communication networks, and combinations thereof.

The transmission device 106 is configured to receive or transmit data via a network. Specific examples of the described network may include a wireless network provided by a communication provider of the mobile terminal 10. In an example, the transmission device 106 may include a Network Interface Controller (NIC) that may be coupled to other network devices via a base station to communicate with the Internet. In an example, the transmission device 106 may be a Radio Frequency (RF) module for communicating wirelessly with the Internet.

The embodiment provides an information processing method for the described network architecture. Fig. 2 is a flowchart of an information processing method according to an embodiment of the present disclosure. As shown in Fig. 2, the flow includes the following operations S202 and S204.

In operation S202, information of a main control channel is defined in a specified field of a common channel between two slots.

In operation S204, the common channel is transmitted on carriers of a control channel and a service channel simultaneously.

By means of operation S202 and operation S204, information of a main control channel can be defined in a specified field of a common channel between two slots, and then the common channel is transmitted on carriers of a control channel and a service channel simultaneously, thereby solving the problem in the related art that scanning of a main control channel needs to be manually configured.

In at least one exemplary embodiment, the entity for performing the foregoing operations may be, but is not limited to, a base station or a terminal.

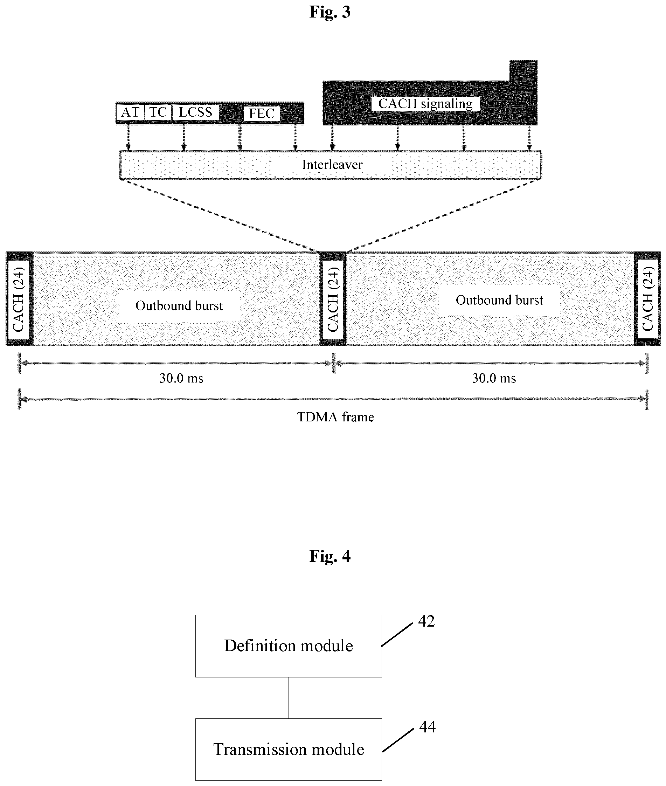

In an exemplary implementation of the embodiment, the two slots involved in the embodiment may be obtained by dividing one Time Division Multiple Access (TDMA) frame. Fig. 3 is a schematic diagram of the structure of a TDMA frame according to an embodiment of the present disclosure. Based on Fig. 3, a manner of defining the information of the main control channel in the specified field of the common channel between the two slots involved in operation S202 of the embodiment may include operations as follows.

In operation S202-11, a signaling field of the common channel is divided into multiple fields.

In operation S202-12, part of fields is selected from the multiple fields divided from the signaling field and the information of the main control channel is defined in the selected part of fields.

It should be noted that the information of the main control channel involved in the embodiments of the present disclosure is preferably a channel number and a slot of the main control channel. In practical use, the information of the main control channel may be mapped into a corresponding physical frequency and slot taking into consideration of host information. Of course, the above are only examples and do not form limits to the present disclosure, that is, other type of information of the main control channel is also within the scope of protection of the present disclosure.

In operation S202-13, other fields except the part of fields for defining the information of the main control channel are defined as a reserved field and a field for carrying check information.

In an exemplary implementation of the embodiment, the common channel involved in the embodiment is a Common Announcement Channel (CACH).

The part of fields for defining the information of the main control channel includes a 3bit main control channel and a 1bit main control channel slot, a 6bit reserved field and a 7bit check field.

It should be noted that the original definition of the CACH in the related art is as shown in Table 1.

**Table 1**

| **CACH (24 bit)** | | | |
|---|---|---|---|
| Field content | Length | Value | Description |
| AT | 1 | 0 | Uplink slot is idle |
| | | 1 | Uplink slot is occupied |
| TC | 1 | 0 | The present downlink slot is channel 1 |
| | | 1 | The present downlink slot is channel 2 |
| LCSS | 2 | 00 | Single-segment LC or first segment of CSBK |
| | | 01 | First section of LC signaling |
| | | 10 | Last segment of LC or CSBK signaling |
| | | 11 | Subsequent segments of LC or CSBK signaling |
| FEC | 3 | | Hamming (7,4) |
| signaling | 17 | | Information |

After the operations of the method according to the embodiment, the customized CACH is as shown in Table 2.

**Table 2**

| **CACH_Control Channel (24 bit)** | | | |
|---|---|---|---|
| Field content | Length | Value | Description |
| AT | 1 | 0 | Uplink slot is idle |
| | | 1 | Uplink slot is occupied |
| TC | 1 | 0 | The present downlink slot is channel 1 |
| | | 1 | The present downlink slot is channel 2 |
| LCSS | 2 | 00 | Single-segment LC or first segment of CSBK |
| | | 01 | First section of LC signaling |
| | | 10 | Last segment of LC or CSBK signaling |
| | | 11 | Subsequent segments of LC or CSBK signaling |
| FEC | 3 | | Hamming (7,4) |
| Tar Channel | 3 | | Main control channel |
| Tar Channel Shot | 1 | | Main control channel slot |
| Reserved | 6 | | Reserved |
| CRC-7 bit | 7 | | 7bit CRC |

It should be noted that the above field arrangement is only an example, and is directed to a single-package CACH transmission method, and certainly, multi-package CACH transmission (e.g., 2 or 3-package CACH transmission) is also within the scope of protection of the present disclosure. Based on this, a system carries a CACH as provided in the embodiments of the present disclosure in a channel, so that a terminal can obtain the information of the main control channel via a CACH as long as there is a channel having a carrier, and therefore the rate of obtaining the information of the main control channel can be improved. That is to say, a control channel is notified via a CACH, and there is no need to manually configure and scan the channel. Since the CACH can be broadcast on a control channel and a service channel, the information of the control channel can be obtained by any terminal on carriers after the terminal synchronize with the channel, and the problem that the terminal can only obtain the information of the control channel on the control channel or the service channel related to the terminal is solved. The problem that the terminal cannot obtain useful information after synchronizing with the channel in the scanning process is avoided, and the information of the control channel can be obtained without interaction with the current channel.

Through the description of the above implementations, those having ordinary skill in the art can understand that the method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

### Embodiment 2

The embodiment provides an information processing device. The information processing device is used to implement the above embodiments and exemplary implementations, and the details having been described will not be repeated. As used below, the term "module" may implement a combination of software and/or hardware of a predetermined function. Although the information processing device described in the following embodiments is preferably implemented in software, the implementation in hardware or a combination of software and hardware is also possible and contemplated.

Fig. 4 is a schematic diagram of the structure of an information processing device according to an embodiment of the present disclosure. As shown in Fig. 4, the device includes: a definition module 42, configured to define information of a main control channel in a specified field of a common channel between two slots; and a transmission module 44, coupled to the definition module 42 and configured to transmit a common channel on carriers of a control channel and a service channel simultaneously.

In at least one exemplary embodiment, the two slots are obtained by dividing one Time Division Multiple Access (TDMA) frame.

Based on this, the definition module 42 involved in the embodiment includes: a division unit, configured to divide a signaling field of the common channel into multiple fields; and a definition unit, configured to select part of fields from the multiple fields divided from the signaling field and define the information of the main control channel in the selected part of fields. In addition, the definition unit is further configured to define other fields except the part of fields for defining the information of the main control channel as a reserved field and a field for carrying check information.

It is to be noted that each of the above modules may be implemented by software or hardware. For the latter, the modules may be implemented by, but not limited to, either of the following manners: the above modules are all located in the same processor; or, the above modules are located in different processors in any combination form respectively.

### Embodiment 3

The embodiment of the present disclosure provides a storage medium. The storage medium stores a computer program, wherein the computer program is configured to execute the operations in any one of the method embodiments at runtime.

In at least one exemplary embodiment, the storage medium may be configured to store a computer program for executing the following operations.

In operation S1, information of a main control channel is defined in a specified field of a common channel between two slots.

In operation S2, the common channel is transmitted on carriers of a control channel and a service channel simultaneously.

In at least one exemplary embodiment, \the storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiment of the present disclosure also provides an electronic device, including a memory and a processor, wherein the memory stores a computer program, and the processor is configured to run the computer program to execute the operations in any of the described method embodiments.

In at least one exemplary embodiment, the electronic device may further include a transmission device and an input/output device, wherein the transmission device is connected to the processor, and the input/output device is connected to the processor.

In operation S1, information of a main control channel is defined in a specified field of a common channel between two slots.

In operation S2, the common channel is transmitted on carriers of a control channel and a service channel simultaneously.

Optionally, specific implementations for the present embodiment may refer to the examples described in the above embodiments and alternative implementations, and details are not repeated in the present embodiment.

It is apparent that a person skilled in the art shall understand that all of the above-mentioned modules or operations in the present disclosure may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

The above is only the exemplary embodiments of the present disclosure, not intended to limit the present disclosure. As will occur to those having ordinary skill in the art, the present disclosure is susceptible to various modifications and changes. Any modifications, equivalent replacements, improvements and the like made within the principle of the present disclosure shall fall within the scope of protection of the present disclosure.

### Industrial Applicability

By means of the channel processing method in the embodiments of the present disclosure, information of a main control channel can be defined in a specified field of a common channel between two slots, and then the common channel is transmitted on carriers of a control channel and a service channel simultaneously, thereby solving the problem in the related art that scanning of a main control channel needs to be manually configured.

## Claims

1. An information processing method, comprising:
defining information of a main control channel in a specified field of a common channel between two slots; and
transmitting the common channel on carriers of a control channel and a service channel simultaneously.

2. The method according to claim 1, wherein the two slots are obtained by dividing one Time Division Multiple Access, TDMA, frame.

3. The method according to claim 2, wherein defining the information of the main control channel in the specified field of the common channel between the two slots comprises:
dividing a signaling field of the common channel into multiple fields; and
selecting part of fields from the multiple fields divided from the signaling field and defining the information of the main control channel in the selected part of fields.

4. The method according to claim 3, wherein
other fields except the part of fields for defining the information of the main control channel are defined as a reserved field and a field for carrying check information.

5. The method according to claim 4, wherein the part of fields for defining the information of the main control channel comprises a 3-bit main control channel and a 1-bit main control channel slot, and a 6bit reserved field and a 7bit check field.

6. An information processing device, comprising:
a definition module, configured to define information of a main control channel in a specified field of a common channel between two slots; and
a transmission module, configured to transmit the common channel on carriers of a control channel and a service channel simultaneously.

7. The device according to claim 6, wherein the two slots are obtained by dividing one Time Division Multiple Access, TDMA, frame.

8. The device according to claim 7, wherein the definition module comprises:
a dividing unit, configured to divide a signaling field of the common channel into multiple fields; and
a definition unit, configured to select part of fields from the multiple fields divided from the signaling field and define the information of the main control channel in the selected part of fields.

9. The device according to claim 8, wherein
the definition unit is further configured to define other fields except the part of fields for defining the information of the main control channel as a reserved field and a field for carrying check information.

10. A storage medium, wherein the storage medium stores a computer program, and the computer program is configured to execute the method according to any one of claims 1 to 5 at runtime.

11. An electronic device, comprising a memory and a processor, wherein the memory stores a computer program, and the processor is configured to run the computer program to execute the method according to any one of claims 1 to 5.
